# EUROPEAN PATENT APPLICATION

(11) **EP 4 560 602 A1**
(43) Date of publication of application: **28.05.2025**
(21) Application number: 23872401.7
(22) Date of filing: 27.09.2023
(51) Int. Cl.: G08G 1/09, B60W 30/14

(54) **INFORMATION PROCESSING DEVICE, INFORMATION PROCESSING METHOD, AND PROGRAM**

(30) Priority: 29.09.2022 JP 2022156063
(71) Applicant: HONDA MOTOR CO., LTD., Minato-ku Tokyo 107-8556 (JP)
(72) Inventor: KONDAPALLY Anirudh reddy, Wako-shi, Saitama 351-0193 (JP); YAMADA Kentaro, Wako-shi, Saitama 351-0193 (JP)
(74) Representative: Kiwit, Benedikt
(86) International application number: PCT/JP2023/035103
(87) International publication number: WO 2024/071179

(57) **Abstract**

Provided is an information processing device including: an acquisition unit that acquires a captured image obtained by capturing an image of the vicinity of a movement position of a moving object using a camera; a detection unit that detects one or more targets included in the captured image and a spatial relationship between the one or more targets; an addition unit that adds general knowledge information to at least any of the detected one or more targets or spatial relationship; and a determination unit that determines the movement position of the moving object on the basis of a result of addition of the general knowledge information.

## Description

### TECHNICAL FIELD

The present invention relates to an information processing device, an information processing method, and a program.

### BACKGROUND ART

Since the past, techniques of automatically determining a movement position of a vehicle has been known. For example, Patent Document 1 discloses an automated driving system for controlling an automated driving vehicle that provides a driverless transportation service to a user. The technique disclosed in Patent Document 1 performs control so as to stop a vehicle at a target stop space within a predetermined boarding/alighting area.

### Citation List

### Patent Document

Patent Document 1 Japanese Unexamined Patent Application, First Publication No. 2021-162886

### SUMMARY OF INVENTION

### Technical Problem

However, the technique disclosed in Patent Document 1 is for stopping a vehicle in a target stop space specified in advance, and more generally, is not capable of determining a stop position of the vehicle from among candidates for the countless stop positions existing on a road. In this regard, in recent years, a technique of using a trained model obtained through, for example, reinforcement learning to specify a movement position from an image captured by a camera mounted on a vehicle has been known. However, the details of processing in a method using such a trained model are non-intuitive and black box. Further, when traffic rules related to the movement of vehicles are updated, the entire trained model needs to be updated on the basis of a new data set, which may result in low scalability.

The present invention was contrived in view of such circumstances, and one object thereof is to provide an information processing device, an information processing method, and a program that make it possible to determine the movement position of a moving object using an intuitive and highly scalable method.

### Solution to Problem

The following configurations are adopted in an information processing device, an information processing method, and a program according to this invention.
(1) According to an aspect of this invention, there is provided an information processing device including: an acquisition unit that acquires a captured image obtained by capturing an image of the vicinity of a movement position of a moving object using a camera; a detection unit that detects one or more targets included in the captured image and a spatial relationship between the one or more targets; an addition unit that adds general knowledge information to at least any of the detected one or more targets or spatial relationship; and a determination unit that determines the movement position of the moving object on the basis of a result of addition of the general knowledge information.
(2) In the aspect of the above (1), the general knowledge information is information that defines in advance rules related to traveling of the moving object.
(3) In the aspect of the above (1), the detection unit detects the one or more targets from the captured image as objects in a scene graph, and detects the spatial relationship as a spatial relationship between the objects.
(4) In the aspect of the above (3), the addition unit adds the general knowledge information to at least any of the one or more objects or spatial relationships in the scene graph.
(5) In the aspect of the above (1), the determination unit determines the movement position by specifying a position to which the moving object is able to move among the one or more targets with reference to the result of addition of the general knowledge information.
(6) In the aspect of the above (1), the determination unit determines the movement position by specifying a priority order of positions to which the moving object is able to move among the one or more targets with reference to the result of addition of the general knowledge information.
(7) In any aspect of the above (1) to (6), the information processing device further includes a control unit that causes the moving object to travel to the determined movement position.
(8) According to another aspect of this invention, there is provided an information processing method comprising causing a computer to: acquire a captured image obtained by capturing an image of the vicinity of a movement position of a moving object using a camera; detect one or more targets included in the captured image and a spatial relationship between the one or more targets; add general knowledge information to at least any of the detected one or more targets or spatial relationship; and determine the movement position of the moving object on the basis of a result of addition of the general knowledge information.
(9) According to another aspect of this invention, there is provided a program causing a computer to: acquire a captured image obtained by capturing an image of the vicinity of a movement position of a moving object using a camera; detect one or more targets included in the captured image and a spatial relationship between the one or more targets; add general knowledge information to at least any of the detected one or more targets or spatial relationship; and determine the movement position of the moving object on the basis of a result of addition of the general knowledge information.

### Advantageous Effects of Invention

According to the aspects of (1) to (9), it is possible to determine the movement position of a moving object using an intuitive and highly scalable method.

### BRIEF DESCRIPTION OF DRAWINGS

[FIG. 1] A diagram illustrating an example of a configuration of a moving object 1 and a control device 100 according to an embodiment.
[FIG. 2] A perspective view of the moving object 1 seen from above.
[FIG. 3] A diagram illustrating an example of a captured image IM captured by an external camera.
[FIG. 4] A diagram illustrating an example of one or more targets and spatial relationships which are detected by a detection unit 120.
[FIG. 5] A diagram illustrating an example of a configuration of general knowledge information 74.
[FIG. 6] A diagram illustrating an example of general knowledge added by an addition unit 130.
[FIG. 7] A diagram illustrating an example of a movement position of the moving object 1 determined by a determination unit 140.
[FIG. 8] A flowchart illustrating an example of a flow of processing executed by the control device 100.

### DESCRIPTION OF EMBODIMENTS

Hereinafter, an embodiment of an information processing device, an information processing method, and a program of the present invention will be described with reference to the accompanying drawings. The information processing device is mounted on a moving object. The moving object moves both on a roadway and in a predetermined region different from the roadway. The moving object is sometimes referred to as a micro mobility. An electric kickboard is a type of micro mobility. The predetermined region is, for example, a sidewalk. In addition, the predetermined region may be some or all of a roadside strip, a bicycle lane, a public open space, and the like, or may include all of the sidewalk, the roadside strip, the bicycle lane, the public open space, and the like. As will be described below, the information processing device according to the present embodiment determines the movement position of the moving object on the basis of a captured image obtained by capturing an image of the vicinity of the moving object. As an example, a case in which the information processing device according to the present embodiment determines a stop position as the movement position of the moving object will be described below.

### [Overall configuration]

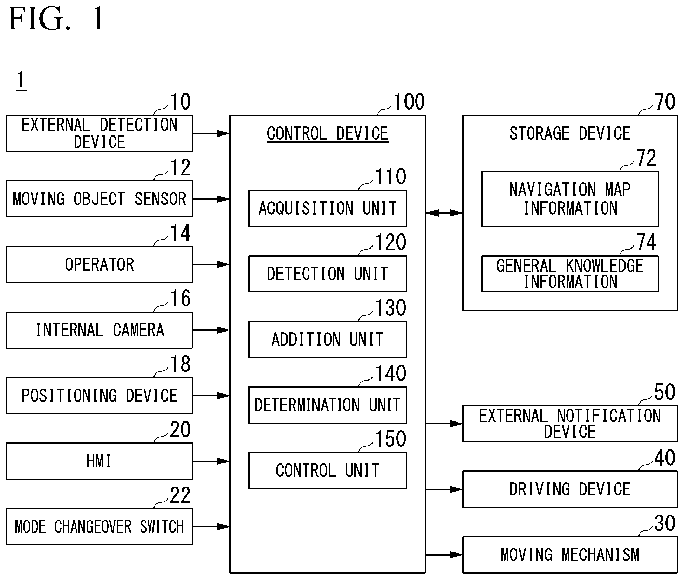

FIG. 1 is a diagram illustrating an example of a configuration of a moving object 1 and a control device 100 according to an embodiment. The moving object 1 is equipped with, for example, an external detection device 10, a moving object sensor 12, an operator 14, an internal camera 16, a positioning device 18, an HMI 20, a mode changeover switch 22, a moving mechanism 30, a driving device 40, an external notification device 50, a storage device 70, and the control device 100. Meanwhile, some of these configurations which are not essential for realizing the functions of the present invention may be omitted. The moving object is not limited to a vehicle, and may include small mobility objects that run alongside a walking user to carry luggage or lead a person, or may include other moving objects that can move autonomously (such as, for example, walking robots).

The external detection device 10 is a variety of devices having a detection range in the traveling direction of the moving object 1. The external detection device 10 includes an external camera, a radar device, a light detection and ranging (LIDAR), a sensor fusion device, and the like. The external detection device 10 outputs information indicating the detection result (such as an image or the position of an object) to the control device 100. Particularly, in the present embodiment, the external detection device 10 is assumed to output a captured image obtained by capturing an image of the vicinity of the moving object 1 using an external camera to the control device 100.

The moving object sensor 12 includes, for example, a speed sensor, an acceleration sensor, a yaw rate (angular velocity) sensor, an orientation sensor, an operation amount detection sensor attached to the operator 14, or the like. The operator 14 includes, for example, an operator for instructing acceleration and deceleration (for example, an accelerator pedal or a brake pedal) and an operator for instructing steering (for example, a steering wheel). In this case, the moving object sensor 12 may include an accelerator position sensor, a brake stepping amount sensor, a steering torque sensor, or the like. The moving object 1 may be provided with operators in a form other than that described above (such as, for example, a rotary operator which is not annular, a joystick, or a button) as the operator 14.

The internal camera 16 captures an image of at least the head of an occupant of the moving object 1 from the front. The internal camera 16 is a digital camera that uses an imaging element such as a charge coupled device (CCD) or a complementary metal oxide semiconductor (CMOS). The internal camera 16 outputs the captured image to the control device 100.

The positioning device 18 is a device that measures the position of the moving object 1. The positioning device 18 is, for example, a global navigation satellite system (GNSS) receiver, and specifies the position of the moving object 1 on the basis of signals received from GNSS satellites and outputs it as position information. Meanwhile, the position information of the moving object 1 may be estimated from the position of a Wi-Fi base station to which a communication device to be described later is connected.

The HMI 20 includes a display device, a speaker, a touch panel, keys, and the like. The occupant of the moving object 1 sets, for example, a destination of the moving object 1 through the HMI 20, and a control unit 150 to be described later causes the moving object 1 to travel to the set destination. Particularly, in the present embodiment, the HMI 20 includes a voice input instrument such as a microphone, and the occupant of the moving object 1 speaks an instruction sentence for instructing the stop position of the moving object 1 to input it to the voice input instrument. The HMI 20 analyzes the voice of the input instruction sentence, converts the voice to text, and outputs it to the control device 100. Alternatively, the HMI 20 may, for example, accept an instruction sentence which has been input as text by the occupant through a touch panel, and output the accepted instruction sentence to the control device 100.

The mode changeover switch 22 is a switch which is operated by an occupant. The mode changeover switch 22 may be a mechanical switch, or may be a graphical user interface (GUI) switch which is set on the touch panel of the HMI 20. The mode changeover switch 22 accepts an operation for switching the driving mode to, for example, either mode A: an assist mode in which one of the steering operation and acceleration/deceleration control is performed by the occupant and the other is performed automatically (there may be mode A-1 in which the steering operation is performed by the occupant and acceleration/deceleration control is performed automatically, and mode A-2 in which the acceleration/deceleration operation is performed by the occupant and steering control is performed automatically), mode B: a manual driving mode in which the steering operation and acceleration/deceleration operation are performed by the occupant, or mode C: an automated driving mode in which the operation control and acceleration/deceleration control are performed automatically.

The moving mechanism 30 is a mechanism for moving the moving object 1 on a road. The moving mechanism 30 is, for example, a group of wheels including a steering wheel and driving wheels. In addition, the moving mechanism 30 may also be a leg for walking on multiple legs.

The driving device 40 outputs a force to the moving mechanism 30 to move the moving object 1. For example, the driving device 40 includes a motor that drives the driving wheels, a battery that stores electric power to be supplied to the motor, a steering device that adjusts the steering angle of the steering wheel, and the like. The driving device 40 may include an internal-combustion engine, a fuel cell, or the like as a driving force output means or a power generation means. In addition, the driving device 40 may further include a brake device based on frictional force or air resistance.

The external notification device 50 is, for example, a lamp, a display device, a speaker, or the like which is provided on the outer plate portion of the moving object 1 to notify the outside of the moving object 1 of information. The external notification device 50 performs different operations depending on a state in which the moving object 1 is moving on a sidewalk and a state in which it is moving on a roadway. For example, the external notification device 50 is controlled so that the lamp is caused to emit light in a case where the moving object 1 is moving on a sidewalk, and that the lamp is caused not to emit light in a case where the moving object 1 is moving on a roadway. The color of light emitted by this lamp is preferably a color specified by law. The external notification device 50 may be controlled so that the lamp is caused to emit green light in a case where the moving object 1 is moving on a sidewalk, and that the lamp is caused to emit blue light in a case where the moving object 1 is moving on a roadway. In a case where the external notification device 50 is a display device, the external notification device 50 displays a text or graphic message of "traveling on a sidewalk" when the moving object 1 is traveling on a sidewalk.

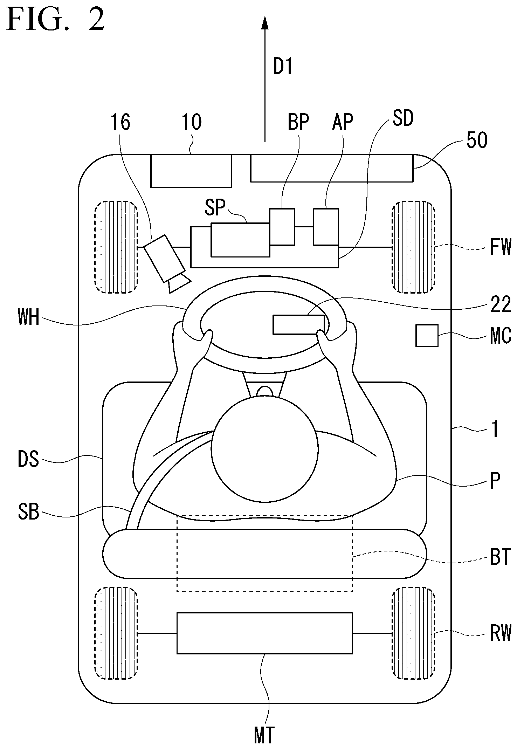

FIG. 2 is a perspective view of the moving object 1 seen from above. In the drawing, FW is a steering wheel, RW is a driving wheel, SD is a steering device, MT is a motor, and BT is a battery. The steering device SD, the motor MT, and the battery BT are included in the driving device 40. In addition, AP is an accelerator pedal, BP is a brake pedal, WH is a steering wheel, SP is a speaker, and MC is a microphone. The moving object 1 shown in the figure is a single-seat moving object, and an occupant P is seated in a driver's seat DS and fastened with a seat belt SB. An arrow D1 is the traveling direction (velocity vector) of the moving object 1. The external detection device 10 is provided near the front end portion of the moving object 1, the internal camera 16 is provided at a position where an image of the head of the occupant P can be captured from in front of the occupant P, and the mode changeover switch 22 is provided at the boss portion of the steering wheel WH. In addition, the external notification device 50 serving as a display device is provided near the front end portion of the moving object 1.

Referring back to FIG. 1, the storage device 70 is a non-transitory storage device such as, for example, a hard disk drive (HDD), a flash memory, or a random access memory (RAM). The storage device 70 stores navigation map information 72, general knowledge information 74, and the like. Although the storage device 70 is illustrated outside the frame of the control device 100 in the drawing, the storage device 70 may be included in the control device 100. In addition, the storage device 70 may also be provided on a server (not shown).

The navigation map information 72 is map information which is stored in in advance in the storage device 70 and includes, for example, information on the center of a road including a roadway and a sidewalk, information on the boundary of the road, or the like. The navigation map information 72 further includes information (such as name, address, or area) on facilities and buildings which are adjacent to the boundary of the road. The details of the general knowledge information 74 will be described later.

### [Control device]

The control device 100 includes, for example, an acquisition unit 110, a detection unit 120, an addition unit 130, a determination unit 140, and the control unit 150. The acquisition unit 110, the detection unit 120, the addition unit 130, the determination unit 140, and the control unit 150 are realized by a hardware processor such as, for example, a central processing unit (CPU) executing a program (software). Some or all of these components may be realized by hardware (a circuit unit; including circuitry) such as a large scale integration (LSI), an application specific integrated circuit (ASIC), a field-programmable gate array (FPGA), or a graphics processing unit (GPU), and may be realized by software and hardware in cooperation. The program may be stored in advance in the storage device 70, may be stored in a detachable storage medium (non-transitory storage medium) such as a DVD or a CD-ROM, or may be installed in the storage device 70 by the storage medium being mounted in a drive device. A combination of the acquisition unit 110, the detection unit 120, the addition unit 130, and the determination unit 140 is an example of an "information processing device."

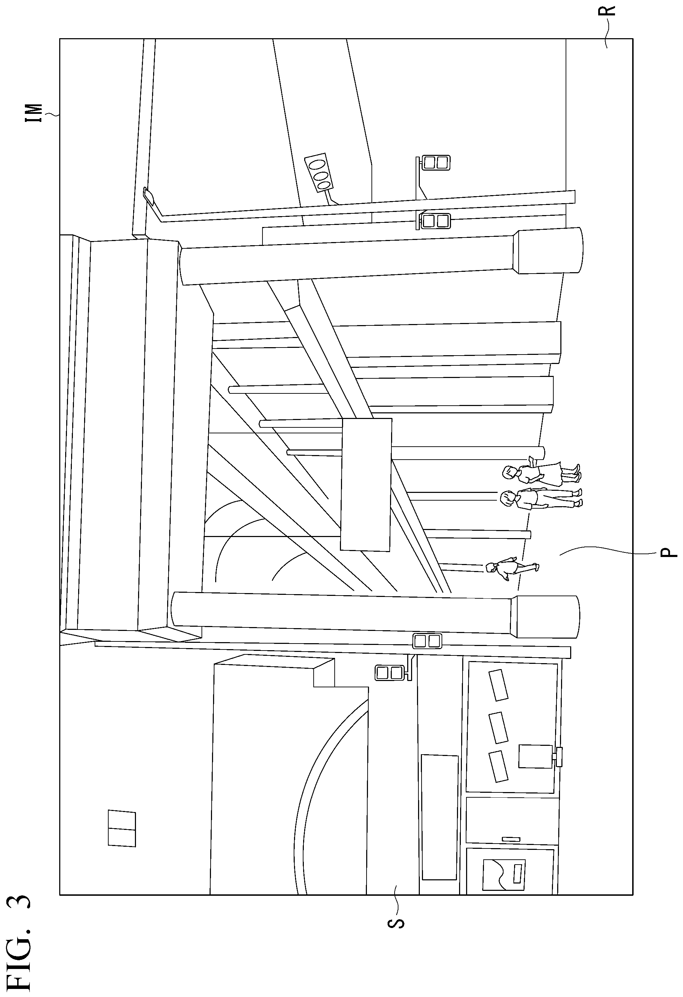

The acquisition unit 110 acquires a captured image IM obtained by capturing an image of the vicinity of the movement position of the moving object 1 using an external camera which is the external detection device 10. FIG. 3 is a diagram illustrating an example of the captured image IM captured by the external camera. FIG. 3 shows, as an example, a situation in which the captured image IM captured by the external camera includes a road R, and a shop S and a passage P which are adjacent to the road R.

Further, the acquisition unit 110 acquires an instruction to stop the moving object 1 which is input by the occupant of the moving object 1 through a voice input instrument that is the HMI 20. The processes executed by the detection unit 120, the addition unit 130, and the determination unit 140 which will be described below are assumed to be executed when the acquisition unit 110 acquires an instruction to stop the moving object 1.

The detection unit 120 detects one or more targets included in the captured image acquired by the acquisition unit 110 and a spatial relationship between the one or more targets. More specifically, the detection unit 120 detects one or more targets as objects belonging to a certain class from the captured image by performing a well-known scene graph (scene graph) generation process on the captured image, and detects the spatial relationship between the one or more detected targets as the spatial relationship between the detected objects. Here, the class represents the type of target defined in advance (such as, for example, a road or a shop to be described later), and the spatial relationship between objects represents the type of spatial relationship defined in advance (such as, for example, 'adjacent' or 'connect' to be described later). It is assumed that these classes and spatial relationships are specified by performing a well-known scene graph generation process on the captured image.

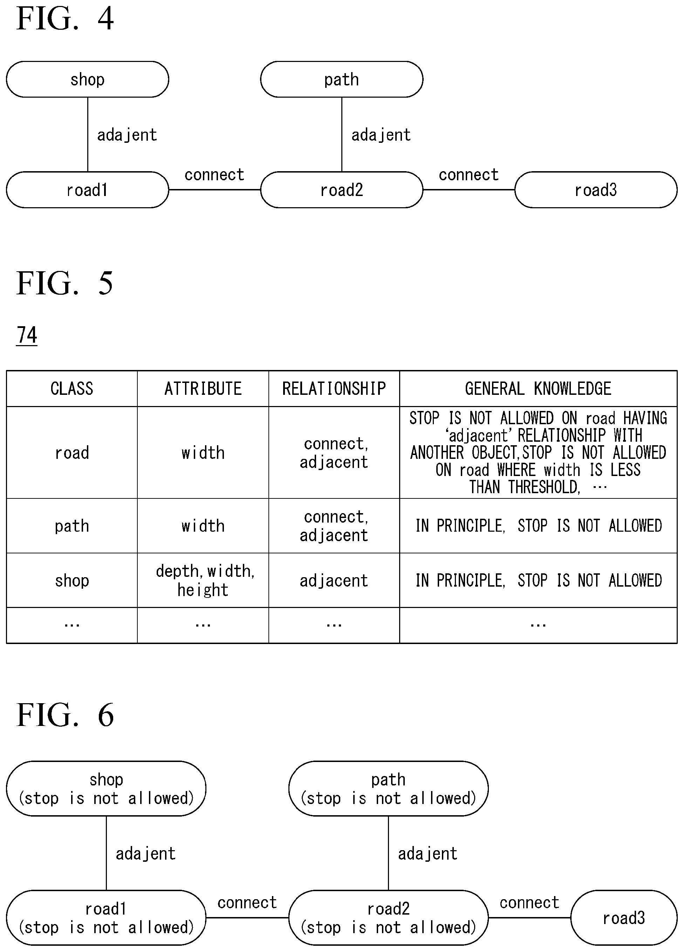

FIG. 4 is a diagram illustrating an example of one or more targets and spatial relationships which are detected by the detection unit 120. FIG. 4 shows an example of one or more targets and their spatial relationships detected as objects by the detection unit 120 by performing a scene graph generation process on the image shown in FIG. 3. In FIG. 4, the object shop represents a shop corresponding to the shop S in FIG. 3, the object path represents a passage for pedestrians corresponding to the passage P in FIG. 3, the object road (road1, road2, road3) represents a roadway corresponding to the road R in FIG. 3.

Further, in the scene graph of FIG. 4, 'adjacent' and 'connect' represent the spatial relationship between two objects. More specifically, 'adjacent' represents that objects of a plurality of different classes are adjacent to each other, and 'connect' represents that objects of the same class are adjacent to each other (that is, connected). Meanwhile, these classes and spatial relationships are merely examples, and different classes and spatial relationships may be obtained depending on the settings in the scene graph generation process. For example, in FIG. 3, a 'path' which is a passage for pedestrians and a 'road' which is a roadway may be assigned the same class (for example, 'path') as a common concept. In addition, for example, instead of 'adjacent,' spatial relationships such as 'front,' 'behind,' 'left,' and 'right' may be assigned based on the viewpoint of the camera that has captured the image.

The addition unit 130 adds the general knowledge information 74 relating to the traveling of the moving object 1 to at least any of the one or more targets or spatial relationships detected by the detection unit 120. FIG. 5 is a diagram illustrating an example of a configuration of the general knowledge information 74. The general knowledge information 74 is, for example, information such as attributes, relationships, and general knowledge associated with a class. The attribute is a value that defines a property associated with an object indicated by the class. For example, the road class has a width as an attribute. In this case, for example, in a case where a target belonging to the road class is detected from the captured image, the detection unit 120 estimates the width of the target through image processing, and sets the value of the estimated width of the target as 'width.'

The relationship is a value that defines a possible relationship with another object. For example, in a case where the road class is adjacent to another object classified as the same road class, it has a 'connect' relationship with the other object, whereas in a case where it is adjacent to another object classified as a class different from the road class, it has an 'adjacent' relationship with the other object.

The general knowledge is information that defines in advance rules related to the traveling of the moving object 1, and is information that defines common knowledge related to objects indicated by a certain class. For example, generally, it is common knowledge that in a case where there is an object (for example, a shop) adjacent to a road, a vehicle should not stop in front of the object. That is, this common knowledge is defined for the road class of the scene graph as "stop is not allowed on a road having an 'adjacent' relationship with another object." In addition, for example, generally, it is common knowledge to avoid stop insofar as possible on a road where heavy traffic is expected (for example, a point of intersection or a branching route). That is, this common knowledge can be defined for the road class of the scene graph as "stop on a road where the number of roads with which there is a 'connect' relationship is equal to or greater than a threshold (for example, 3) is not allowed" (not allowed at all), or can be defined as "only when it is not possible to stop on a road where the number of roads with which there is a 'connect' relationship is less than a threshold (for example, 3), stop on a road where the number is equal to or greater than the threshold is allowed" (conditional allowance). In addition, for example, generally, it is common knowledge that a vehicle should not stop on a narrow road. That is, this common knowledge can be defined for the road class of the scene graph as "stop is not allowed on a road where the attribute width is less than the threshold," or can be defined as "stop is not allowed on a road where the vehicle width divided by the attribute width is equal to or greater than the threshold" on the basis of vehicle width information stored in advance. In this way, the general knowledge can be defined not only in combination with objects in the scene graph, but with information relating to the moving object 1 (such as, for example, a vehicle width or a vehicle model). Meanwhile, in FIG. 5, for convenience of description, the general knowledge information 74 is defined in a table format, but the general knowledge information 74 may be defined in any format (such as, for example, XML or JSON).

In addition, the general knowledge does not necessarily have to be limited to content such as common knowledge. For example, the general knowledge may include knowledge for improving user convenience, knowledge for bringing about business benefits in a case where the moving object 1 is provided as a service, and the like. For example, generally, in the case of bad weather, it is more convenient for a user to stop on a road facing a roofed area. That is, this knowledge can be defined as adding an attribute roof (for example, roof: 1 (roof present)/0 (no roof)) indicating whether or not there is a roof to the attributes of the road class of the scene graph, and then defined as "In case of bad weather, stop on a road where the roof is 1." In this case, whether the weather is "bad weather" can be determined, for example, by detecting raindrops shown in the captured image through image processing, or can be determined by acquiring weather information through a communication device (not shown) mounted on the moving object 1.

In addition, for example, generally, it is more convenient for a user to stop on a flat road than to stop on a road with a steep slope. That is, this knowledge can be defined as adding the attribute slope indicating the slope of the road (for example, it may be defined as a continuous value of an angle, or may be defined as a discrete value indicating the degree of slope) to the attributes of the road class of the scene graph, and then defined as "if it is possible to stop on a plurality of roads, stop on a road with the smallest slope." In this case, the slope of the road can be estimated, for example, through image processing of the captured image, or slope information stored in the navigation map information 72 can be acquired.

Similarly, for example, one of the purposes of providing the moving object 1 as a service may be to increase the income of a shop within the service area. In order to increase the income of a shop within the service area, for example, it can be considered to stop the moving object 1 on a road near the shop and guide the occupant to the shop. That is, this knowledge can be defined as general knowledge of the road class of the scene graph, for example, as "a road having a 'connect' relationship stops on a road having an 'adjacent' relationship with 'shop.'" In addition, for example, the attribute affiliate (for example, affiliate: 1 (affiliated)/0 (unaffiliated)) for identifying affiliated shops within the service area can be defined as the attribute of the shop class of the scene graph, and then defined as "if stop is allowed on a plurality of roads, a road having a 'connect' relationship stops on a road having an 'adjacent' relationship with a shop whose affiliate is 1." In this case, whether or not an object of a certain shop class has an affiliate of 1 can be determined based on the appearance information and loge information of the object shown in the captured image.

In addition, in a case where such knowledge is incorporated into the general knowledge information 74, content such as common knowledge on traffic rules and content such as user convenience and business benefits may be defined as separate data. This allows information that does not change easily, such as common knowledge on traffic rules, to be managed separately from information that is relatively prone to change, such as user convenience and business benefits, which has the advantage of being highly scalable.

The addition unit 130 adds general knowledge to at least any of the one or more targets or spatial relationships defined in the scene graph by collating the scene graph detected by the detection unit 120 with the general knowledge information 74. FIG. 6 is a diagram illustrating an example of addition of general knowledge which is performed by the addition unit 130. FIG. 6 shows a situation in which the addition unit 130 collates the scene graph shown in FIG. 4 with the general knowledge information 74 shown in FIG. 5 and adds general knowledge to an object defined in the scene graph.

More specifically, among three objects (road1, road2, and road3) classified into the road class, 'road1' has an 'adjacent' relationship with 'shop,' and road2 has an 'adjacent' relationship with "path." Therefore, on the basis of the general knowledge stored in the general knowledge information 74 that "stop is not allowed on a road having an 'adjacent' relationship with other objects," the addition unit 130 adds flag information indicating that stop is not allowed on road1 and road2 to these objects. Further, on the basis of the general knowledge information 74, the addition unit 130 recognizes that, in principle, stop is not allowed on two objects classified into the shop class and the path class, and adds flag information indicating stop is not allowed to these objects. As a result, among five objects defined in the scene graph, only road3 is recognized as an object on which stop is allowed. Meanwhile, in FIG. 6, for convenience of description, "stop is not allowed" is added to road1 and road2 as flag information, but any information indicating that stop is not allowed may be added to these objects.

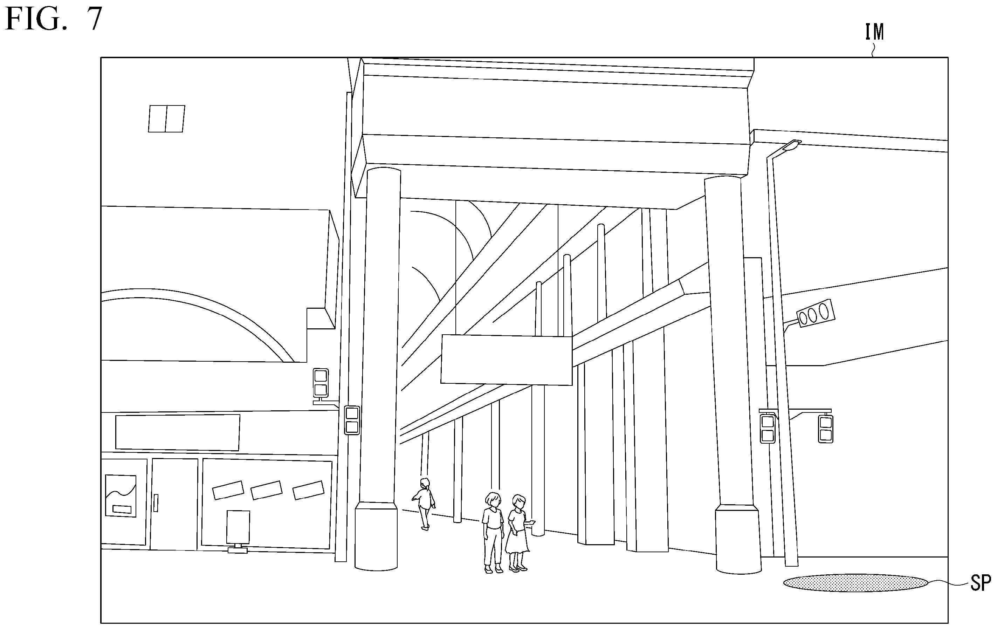

The determination unit 140 refers to the result of addition of the general knowledge to specify a position at which the moving object 1 can stop among one or more targets and determine a stop position of the moving object 1 from the specified position at which stop is allowed. FIG. 7 is a diagram illustrating an example of a stop position of the moving object 1 determined by the determination unit 140. For example, the determination unit 140 recognizes only road3 as an object on which stop is allowed by referring to the scene graph shown in FIG. 6 to which the general knowledge is added by the addition unit 130. Therefore, as shown in FIG. 7, the determination unit 140 determines the position of the captured image corresponding to road3 as a stop position SP. Thereafter, the control unit 150 drives the driving device 40 to cause the moving object 1 to travel to the stop position SP determined by the determination unit 140. Meanwhile, in a case where a plurality of objects on which stop is allowed are recognized from the scene graph, the determination unit 140 may determine, as the stop position SP, an object which is closest in distance to the moving object 1 among the plurality of recognized objects.

In addition, although a case where the general knowledge is added to a target has been described here, the subject to which the general knowledge is added is not limited to this. That is, the general knowledge may be added to spatial relationships. For example, on the basis of the general knowledge "stop is not allowed on a road having an 'adjacent' relationship with an object of the shop class" stored in the general knowledge information 74, a flag indicating information on stop not being allowed can be assigned to 'adjacent' that represents the relationship between an object of the shop class and another object, and the stop position SP can be determined so as not to stop on a road having an 'adjacent' relationship with another object to which the above-described flag has been assigned. This allows detailed settings regarding whether or not stop on an adjacent road is allowed for each object class.

Meanwhile, in the above description, in order to determine the stop position of a moving object, flag information indicating that stop is not allowed has been assigned to the object, the present invention is not limited to this and can also be applied to a case where the priority order of stop positions is determined. That is, in addition to the flag information indicating that stop is not allowed, score information indicating whether stop is suitable or unsuitable may be added. Whether stop is suitable or unsuitable can likewise be recognized on the basis of the general knowledge information 74. For example, it is better not to stop in front of a store, but it is even worse to stop in the middle of a curve or close to a narrow side road. Knowledge regarding the priority order of these may be included in the general knowledge information 74, and the score of a road having an 'adjacent' relationship with an object of the shop class can be set to be more suitable for stop than the score of a road having an attribute curve indicating that the road is in the middle of a curve (for example, curve: 1 (the curvature of the road is equal to or greater than a threshold)/0 (the curvature of the road is less than the threshold)). More generally, in a case where the conditions for each attribute such as roof, slope, or curve described above are satisfied, a score value corresponding to the satisfaction of the conditions may be given, and the moving object 1 may be stopped on a road where the total score value is highest and where it can be stopped. In that case, a total score value may be calculated only for a road that satisfies predetermined essential conditions (for example, conditions for the safety of an occupant), and the moving object 1 may be stopped on the road that satisfies the predetermined essential conditions and has the highest total score value. This allows the moving object 1 to stop at a more appropriate position while preventing the moving object from being unable to stop in an area desired by a user.

In this way, unlike a method such as reinforcement learning which is non-intuitive and of which the details of processing are a black box, the method of the present invention is intuitive and transparent in the details of processing because rules expressing human common knowledge is added to the scene graph and then the stop position SP is determined. Further, in the method of the present invention, the records of the general knowledge information 74 can be updated when update of traffic rules or changes in common knowledge occurs, and this has the advantage of being highly scalable unlike a method such as reinforcement learning which imposes a heavy load on re-learning.

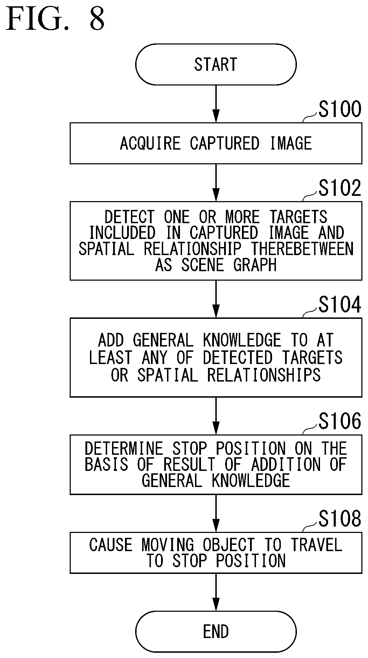

Next, a flow of processing executed by the control device 100 will be described with reference to FIG. 8. FIG. 8 is a flowchart illustrating an example of a flow of processing executed by the control device 100. The processing of the flowchart shown in FIG. 8 is executed, for example, when an occupant of the moving object 1 inputs an instruction to stop the moving object 1 through the HMI 20.

First, the acquisition unit 110 acquires a captured image obtained by an external camera, which is the external detection device 10, capturing an image of the vicinity of the moving object 1 (step S100). Next, the detection unit 120 detects one or more targets included in the captured image acquired by the acquisition unit 110 and a spatial relationship between the one or more targets as a scene graph (step S102).

Next, the addition unit 130 adds general knowledge to at least any of the detected targets or spatial relationships (step S104). Next, the determination unit 140 determines the stop position of the moving object 1 on the basis of the result of addition of the general knowledge (step S106). Next, the control unit 150 causes the moving object 1 to travel to the determined stop position (step S108). This completes the processing according to this flowchart.

Meanwhile, in the above embodiment, an example in which the stop position of a moving object is determined on the basis of a scene graph to which general knowledge information is added has been described. However, the present invention is not limited to such an application. For example, when a meeting place is determined, common knowledge related to meeting (for example, "meet at a famous place (in this case, a "famous place" can be extracted, for example, from the search volume of a search engine, or the like)," "do not meet on a road," or the like) is defined as general knowledge information, and common knowledge related to meeting is added to a scene graph representing a certain area, so that the meeting place can be determined.

In addition, the present invention is applicable not only to determining a destination such as the stop position of a moving object or meeting place, but also to determining a route to a destination. For example, when a route to the stop position is determined, common knowledge related to regions where it is better not to travel (such as, for example, "if there is a puddle on the road surface, do not pass over the puddle") is defined as general information, and common knowledge related to regions where it is better not to travel is added to the scene graph generated from the captured image, so that it is possible to avoid regions where it is better to avoid traveling even if it is physically possible to travel.

In addition, in the above embodiment, an example in which an external camera which is the external detection device 10 is mounted on the moving object 1 and captures an image of the vicinity of the movement position of the moving object 1 has been described. However, the present invention is not limited to such a configuration, and at least the moving object 1 (more specifically, an information processing device included in the moving object 1) need only be able to acquire a captured image of the vicinity of the movement position. For example, the moving object 1 may acquire a captured image representing the vicinity of the movement position of the moving object 1 through a network.

According to the present embodiment described above, it is possible to acquire a captured image obtained by capturing an image of the vicinity of a movement position of a moving object using a camera, detect one or more targets included in the captured image and a spatial relationship between the one or more targets, add general knowledge information to at least any of the detected one or more targets or spatial relationship, and determine the movement position of the moving object on the basis of a result of addition of the general knowledge information. This makes it possible to determine the movement position of the moving object using an intuitive and highly scalable method.

The above-described embodiment can be represented as follows.

An information processing device including:
a storage medium having computer-readable instructions stored therein; and
a processor connected to the storage medium,
wherein the processor executes the computer-readable instructions to
acquire a captured image obtained by capturing an image of the vicinity of a movement position of a moving object using a camera,
detect one or more targets included in the captured image and a spatial relationship between the one or more targets,
add general knowledge information to at least any of the detected one or more targets or spatial relationship, and
determine the movement position of the moving object on the basis of a result of addition of the general knowledge information.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

### REFERENCE SIGNS LIST

10 External detection device
12 Moving object sensor
14 Operator
16 Internal camera
18 Positioning device
20 HMI
22 Mode changeover switch
30 Moving mechanism
40 Driving device
50 External notification device
70 Storage device
72 Navigation map information
100 Control device
110 Acquisition unit
120 Detection unit
130 Addition unit
140 Determination unit
150 Control unit

## Claims

1. An information processing device comprising:
an acquisition unit that acquires a captured image obtained by capturing an image of the vicinity of a movement position of a moving object using a camera;
a detection unit that detects one or more targets included in the captured image and a spatial relationship between the one or more targets;
an addition unit that adds general knowledge information to at least any of the detected one or more targets or spatial relationship; and
a determination unit that determines the movement position of the moving object on the basis of a result of addition of the general knowledge information.

2. The information processing device according to claim 1, wherein the general knowledge information is information that defines in advance rules related to traveling of the moving object.

3. The information processing device according to claim 1, wherein the detection unit detects the one or more targets from the captured image as objects in a scene graph, and detects the spatial relationship as a spatial relationship between the objects.

4. The information processing device according to claim 3, wherein the addition unit adds the general knowledge information to at least any of the one or more objects or spatial relationships in the scene graph.

5. The information processing device according to claim 1, wherein the determination unit determines the movement position by specifying a position to which the moving object is able to move among the one or more targets with reference to the result of addition of the general knowledge information.

6. The information processing device according to claim 1, wherein the determination unit determines the movement position by specifying a priority order of positions to which the moving object is able to move among the one or more targets with reference to the result of addition of the general knowledge information.

7. The information processing device according to any one of claims 1 to 6, further comprising a control unit that causes the moving object to travel to the determined movement position.

8. An information processing method comprising causing a computer to:
acquire a captured image obtained by capturing an image of the vicinity of a movement position of a moving object using a camera;
detect one or more targets included in the captured image and a spatial relationship between the one or more targets;
add general knowledge information to at least any of the detected one or more targets or spatial relationship; and
determine the movement position of the moving object on the basis of a result of addition of the general knowledge information.

9. A program causing a computer to:
acquire a captured image obtained by capturing an image of the vicinity of a movement position of a moving object using a camera;
detect one or more targets included in the captured image and a spatial relationship between the one or more targets;
add general knowledge information to at least any of the detected one or more targets or spatial relationship; and
determine the movement position of the moving object on the basis of a result of addition of the general knowledge information.
